Europäisches Patentamt

European Patent Office

Office européen des brevets

(11) Publication number: **0 476 294 A1**

## EUROPEAN PATENT APPLICATION

(21) Application number: **91113353.6**

(22) Date of filing: **08.08.91**

(51) Int. Cl.⁵: **H04N 1/38**

(30) Priority: **17.09.90 US 583737**

(43) Date of publication of application:
**25.03.92 Bulletin 92/13**

(84) Designated Contracting States:
**DE FR GB**

(71) Applicant: **XEROX CORPORATION**
**Xerox Square - 020**
**Rochester New York 14644(US)**

(72) Inventor: **Buchar, Wayne A.**
**7497 Baptist Hill Road**
**Holcomb, NY 14469(US)**
Inventor: **Rees, James D.**
**5880 Palmyra Road**
**Pittsford, NY 14534(US)**

(74) Representative: **Patentanwälte Grünecker,**
**Kinkeldey, Stockmair & Partner**
**Maximilianstrasse 58**
**W-8000 München 22(DE)**

(54) **Electronic filing system recognizing highlighted original to establish classification and retrieval.**

(57) An electronic filing system is enabled by high-lighting handle information on an original document with a fluorescent marking material, and then scanning the document with an illumination source in a single pass. The reflectivity of the highlighted area is greater than the perceived reflection of the remainder of the document being scanned, and this difference in spectral reflectance is used in conjunction with a bi-level threshold sensing device to generate two output signals, one containing the document information, and the other containing only the handle information. Both signals are stored as digital information in system memory; the document is then retrieved by addressing only the handle signal.

FIG. 7B

## BACKGROUND AND MATERIAL INFORMATION DISCLOSURE

This invention relates generally to a digital imaging electronic filing system and more particularly to a method and apparatus for classifying an image document based on detection storage areas on an original which are highlighted by fluorescent marker.

Digital imaging and storage documents are well known techniques in the art. Original documents are illuminated and scanned by a raster scanning (RIS) unit. The RIS unit typically includes a linear photosensor array such as a charge coupled diode (CCD) array. The document is imaged in line-by-line scans and the array converts each scan line of the image into analog output signals which are subsequently digitized. The digitized signals can then be used for a variety of purposes, for example, in an electronic printing system to drive a raster output scanner (ROS) creating a latent image of the scanned document on the surface of a photosensitive medium, and then obtaining an output hard copy using conventional xerographic techniques. Such a system is disclosed in U.S. Patent 4,786,940. The digital image data can also be stored or filed in an electronic filing system eliminating the immediate need to create and store paper or copy outputs.

In order to retrieve the stored electronic files there must be some system of identifying the stored file. Typical identification criteria might be a document title, and/or a brief description (called a "handle"). There are various ways of incorporating the handle with the stored file. The predominant technique presently used is to enter the handle via a user keyboard at a work station simultaneously with entering the principal associated document. Another technique disclosed is U.S. Patent 4,777,510 involves detecting a highlighted portion of an original during the scan function. The highlight mask indicates a title or key word. The highlighted color is preferably yellow, but other colors may used. The highlighted areas are detected by scanning the document first with a white light and then with, for example, a blue light. The two outputs are then logically analyzed to identify the portion that was highlighted with the yellow color. Other prior art considered relevant as background include the following U.S. Patents:

U.S. Patent No. 4,760,606 to Lesnick et al. discloses a digital imaging file processing system wherein a scanner is combined with a workstation to provide document processing. A method of detecting highlighter pen is shown. (Col. 5, lines 12-20 and Col. 8, line 38, Col. 10, line 11), and a technique to index a document according to a highlighted title is shown, (Col. 8, lines 23-37).

U. S. Patent No. 4,686,704 to Kamada et al. discloses an information input system wherein an optical mark reader (OMR) is used to set timing within a system. A method of denoting titles and key words within a document is shown. (Col. 5, line 64, Col 6, line 2).

U.S. Patent No. 4,748,678 to Takeda et al. discloses a method of storing and retrieving image data wherein a portion of a document is used as an index for the entire document to aid in retrieval of that document. (Col. 11, lines 9-24).

U.S. Patent No. 3,894,178 to Pugsley discloses an image reproduction method and apparatus wherein two scanning heads are used to scan a document for fluorescent marks. The information is used to adjust a threshold level so that defects within a document are eliminated.

U.S. Patent No. 4,803,737 to Sato et al. discloses an optical digitizer wherein two filters are used to detect a highlighted area. This system is used to determine position of graphical data on a medium.

U.S. Patent No. 3,444,517 to Rabinow discloses an optical reading machine and specially prepared documents wherein a method is provided for detecting characters. See Col. 4, lines 31-50. An ultraviolet lamp is used to excite a fluorescent material. See Col. 6, lines 26-47. A technique using two photocells is shown which detects fluorescent marks. See Col. 8, lines 31-58.

The present invention provides a highlighting system which differentiates between background and information areas of an original document and an area of the document which has been marked by a fluorescent material to indicate handle information. According to the present invention, the highlighted areas are marked first by a fluorescent marker. Light reflected from the highlighted areas is readmitted as radiation at a longer wavelength. By placing an appropriate optical filter before the sensing array, the reflection of the document having areas of shorter wavelength can be recognized. Therefore, the spectral integrated reflections of the document as seen by the CCD array through the filter, is greater in the highlighted areas than the reflections from the document background (usually white). In other words, the reflections from the highlighted area is greater than the reflections from the background area. This phenomenon has previously been adapted as disclosed in U.S. Patent 4,937,636, to enable a single pass scanning system to form two color output copies in a xerographic copier by creating three separate discharge levels at a photoreceptor, each level being developed by appropriate colored toners. This unusual characteristic is utilized as disclosed in the present invention by adapting the scanner electronics to interpret all information with reflectance greater than the background as handle information for filing purposes. This function is accomplished, desirably, in a single pass scan mode. More particularly the invention relates to an electronic filing system for scanning an original document and storing in memory digital data representative of the scanned document, said original documents having informational portions thereon highlighted with a fluorescing material, said filing system including: a scanning and detection means for scanning said original document and for detecting said highlighted areas, said scan and detection means including a linear bi-level scanner array adapted to sense, during a single scan, the components of each scan corresponding to non-highlighted and the highlighted portion of the document and to generate output signals representative of said two detected levels and, memory means adapted to store both the highlighted and the non-highlighted digitized image data.

## BRIEF DESCRIPTION OF THE DRAWINGS

Figure 1 is a side schematic view of a scanning system of an electronic filing system according to the present invention.

Figure 2 shows a single document having handle areas highlighted by a fluorescent marker.

Figure 3 shows a schematic block diagram of a bi-level sensing and storing circuits used in Figure 1.

Figure 4 shows a plot of lamp information output over a selected wavelength range.

Figure 5a and 5b show light absorption and reflection from the white and the fluorescent areas, respectively, of Figure 2.

Figures 6a and 6b show the relative emission levels over the selected wavelength range.

Figure 7a and 7b show the reflected light of Figures 5a, 5b passing through a red filter.

Figures 8a and 8b show relative emission over a selected wavelength after filtering.

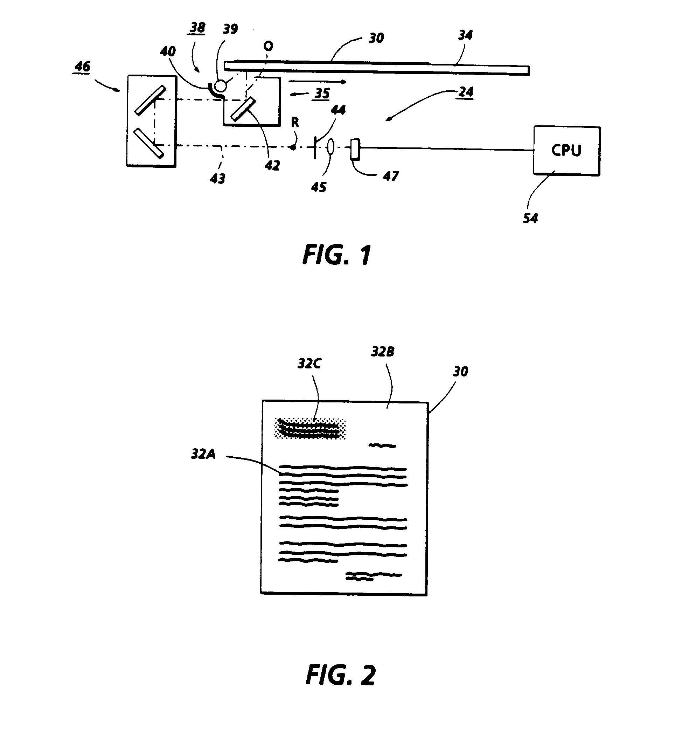

Referring now to Figure 1, there is shown an imaging system generally indicated by the reference numeral 24. An original document 30 is positioned face down on a transparent platen 34. A sample document is shown in Figure 2. The document has black informational areas 32A, white background areas 32B, and highlighted areas 32C which have been marked, for this embodiment, by applying a red fluorescent pigment to this area. Referring again to Figure 1, optics assembly 35 contains the optical components which incrementally scan-illuminate the document from left to right. Shown schematically, these optical components comprise an illumination lamp assembly 38, comprising an elongated white fluorescent illumination lamp 39, and associated elliptical reflector 40.

Lamp 39 has an exposure emission comprising components in the blue, green and red wavelengths (400 - 700 nm). Assembly 38 and full rate scan mirror 42 are mounted on a scan carriage (not shown) adapted to travel along a path parallel to and beneath, the platen. Lamp 39, in conjunction with reflector 40, illuminates an incremental line portion of document 30. The reflected image is reflected by scan mirror 42 to corner mirror 46 which is adapted to move at $\frac{1}{2}$ the rate of carriage mirror 42. The document image is projected along path 43 through a filter 44 and reduction lens 45 onto a solid state photosensor array 47. Array 44, in a preferred embodiment, comprises a 1024 element CCD array of sufficient width to sense the entire image projected through lens 22. Alternatively, several shorter arrays can be combined to form an array assembly of the required length.

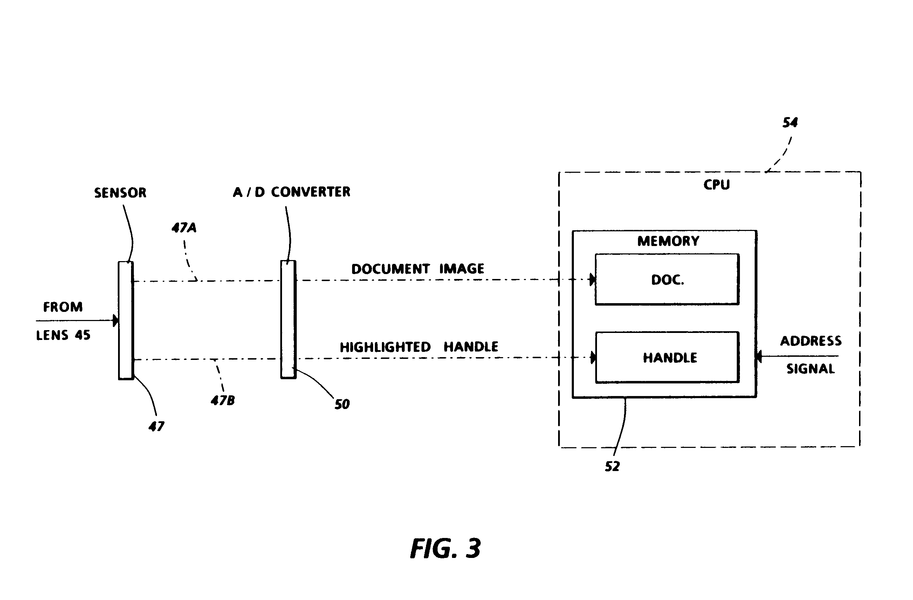

The array is constructed to incorporate two threshold sensing levels. A first threshold is set so that all of the document information contained in a lower wavelength level emission is sensed and a first analog output signal generated. A second (higher) threshold is set so that only the handle information is sensed and a second analog output signal generated. The photosensor array thus has two outputs shown as 47A, 47B in Figure 3. The analog signals are converted to digital signals in A/D converter 50 and stored in two locations in a memory circuit 52 located in central processing unit 54. CPU 54 is adapted to process the stored signals as required for a specific job application. For the example shown, the input signal addressed is the stored handle signal enabling retrieval of the associated document image for further processing.

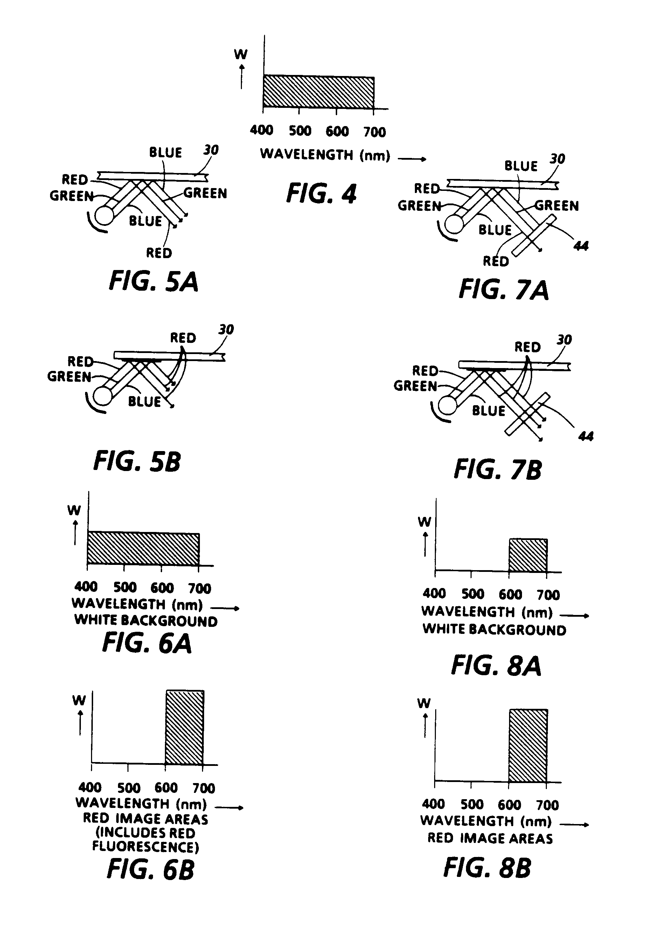

From the above it is seen that the present invention contemplates an optical system which scans a document marked with a fluorescent handle marking and directs a reflected image along an optical path. The highlighted handle area collects the shorter wavelength radiation of the lamp, and as it will be seen below, re-radiates this energy at a longer wavelength. By this mechanism, the spectral reflectance from the document at the highlighted area is quite different than the reflection from the remainder of the document which is not highlighted. Filter 44 is placed in the optical system to reduce reflection of the document at the shorter wavelength. Therefore, the spectral integrated reflectance of the document as seen by sensor 47 looking through filter 44 is greater in the handle area than the received reflection of the remainder of the document; e.g., the reflectance of area 30C is greater than the reflectance of areas 30A, 30B after filtering. The bi-level threshold sensor can then interpret that all information with reflectance greater than the substrate of the document is handle information suitable for filing as such. The mechanism of establishing the two spectral reflectance levels is further explained in the reference to Fig. 4-8.

Figure 4 shows a plot of the emission level of lamp 39 over the wavelength range of 400-700nm. This output illuminates original document 30 and a reflected image of the document is incrementally transmitted, during a scan mode, along optical path 43. The reflected image at, for example, point R, of Figure 1, has three separate light components.

Figures 5A, 5B are simplified schematic representations showing how the light from lamp 39 is reflected from areas 30A, 30B, or 30C, of document 30 (Figure 2).

Figures 6A, 6B show, respectively, relative light emission/reflection outputs W over the selected wavelength for the reflected light shown in Figures 5A, 5B.

Referring to Figure 5A, light incident on informational areas 32A is completely absorbed (since black absorbs all wavelengths). Any light incident on white background areas 32B are reflected. This light, reflected along all wavelengths, has a light level (Fig. 6A) approximately equal to the exposure levels of lamp 39 shown in Figure 4. Figure 5B shows the light reflected from areas 32C, e.g., the highlighted portion of document 30 covered with the fluorescent material. The red components of the incident white light is reflected as red light. The blue and green components are absorbed, and by virtue of the fluorescing properties of the dye, are reemitted as light of a wavelength, e.g., as red light. Thus, the reflected red light (wavelength range of 600-700nm), has a level shown in Figure 6B, higher than the level of Figure 6A.

Referring now to Figures 7 and 8, Figures 7A, 7B show the light reflection from the document passing through red filter 44 while Figures 8A, 8B show the related light emission outputs W over the selected wavelengths following the filtering step.

From Figure 7A, only the red component of the light reflected from white background areas pass through filter 44. Thus, the level of light passing through the filter, shown in Figure 8A is reduced from the reflected level shown in Figure 6B by the shorter wavelength component (400-600NM) blocked by the red filter. From Figure 7B, it is seen that, in addition to the red component of light reflected from the red fluorescent areas 52C, the light components converted from blue and green into red also pass through filter 44. Thus, as shown by Figure 8B, this level of light is greater than the reflected light level of Figure 7B.

From the above analysis, it is appreciated that the light transmitted along the optical path and projected by lens 45 is at two levels. The first threshold of array 47 is set so that all the document information and background information contained in reflected image areas 32A, 32B is sensed. The second threshold is set so that only the highlighted area 32C, is sensed. These two images are processed simultaneously and then filed in separate memory locations. The filed information can first be converted to ASCII for convenient storage.

As an alternative to the above single pass filing, the document can be scanned twice. During the first scan the scan could capture the highlighted information while looking through filter 44 at the threshold. A second scan could then be made to couple the information and background information using a nominal threshold. The two images are then filed together as above.

It will be appreciated that other color fluorescing materials can be used instead of the red in the embodiment described herein. An orange marker may be more appropriate for certain systems. One skilled in the art may match the absorption and reemission characteristics of a fluorescent dye material with the emission characteristics of the light source and select the appropriate color filter. Also, while a white fluorescent lamp has been described, a tungsten filament lamp is a suitable substitute.

While the invention has been described with reference to the structure disclosed, it will be appreciated that numerous changes and modifications are likely to occur to those skilled in the art, and it is intended to cover all changes and modifications which fall within the true spirit and scope of the invention.

## Claims

1. An electronic filing system for scanning an original document and storing in memory digital data representative of the scanned document, said original documents having informational portions thereon highlighted with a fluorescing material, said filing system including: a scanning and detection means for scanning said original document and for detecting said highlighted areas, said scan and detection means including a linear bi-level scanner array adapted to sense, during a single scan, the components of each scan corresponding to non-highlighted and the highlighted portion of the document and to generate output signals representative of said two detected levels and, memory means adapted to store both the highlighted and the non-highlighted digitized image data.

2. An electronic filing system for storing a first, digitized image data representative of a scanned document together with a digitized handle data descriptive of said original document comprising:

scanning means for scanning an original document, said document having at least one area containing handle information, said area highlighted by means of a fluorescent marker,

illumination means for illuminating said original document, said illumination means providing an emission wavelength range of approximately 400 - 700 nm,

bi-level threshold sensing means for sensing, at a first threshold, reflected light images from the non-highlighted portions of the original document and, at a second threshold, reflected, filtered light from the highlighted areas, and for generating output analog signals corresponding to each sensed area, and

processor means for digitizing said output analog signals and storing each set of signals in memory whereby the digitized image data can be retrieved for further processing by addressing the stored handle digitized data.

3. A method for filing and retrieving digital images of original documents including the steps of;

applying a fluorescent marking material to informational portions of a document to be used as a handle,

scan/illuminating the document with an illuminator source having an output emission generally in the 400 - 700 nm range,

directing the reflected image of the document along an optical path, through a filter so as to separate the reflected image into two light levels, a first lower level containing the entire information area, and a second, relatively higher level containing the handle information,

projecting the filtered image on to a two-level sensor array,

generating two output analog signals from said array, corresponding to said two light levels,

digitizing said first and second output signals, and

storing said signals in separate locations in a memory circuit, and retrieving said displayed document by addressing said stored handle signal.

**FIG. 1**

**FIG. 2**

EP 0 476 294 A1

**FIG. 3**

W

400   500   600   700
WAVELENGTH (nm) ⟶

**FIG. 4**

BLUE   *30*
RED
GREEN          GREEN
       BLUE
         RED

**FIG. 5A**

BLUE   *30*
RED
GREEN          GREEN
       BLUE
         RED                    *44*

**FIG. 7A**

RED   *30*
RED
GREEN
       BLUE

**FIG. 5B**

RED   *30*
RED
GREEN
       BLUE
                               *44*

**FIG. 7B**

W

400   500   600   700
WAVELENGTH (nm) ⟶
WHITE BACKGROUND

**FIG. 6A**

W

400   500   600   700
WAVELENGTH (nm) ⟶
WHITE BACKGROUND

**FIG. 8A**

W

400   500   600   700
WAVELENGTH (nm) ⟶
RED IMAGE AREAS
(INCLUDES RED
FLUORESCENCE)

**FIG. 6B**

W

400   500   600   700
WAVELENGTH (nm) ⟶
RED IMAGE AREAS

**FIG. 8B**

# EUROPEAN SEARCH REPORT

**EP 91 11 3353**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 471 386   (TUHRO) <br> * column 3, line 9 - column 4, line 14 * * | 1,2 | H 04 N 1/38 |
| Y | | 3 | |
| | – – – | | |
| D,X | US-A-3 894 178   (PUGSLEY) <br> * column 2, line 38 - line 62 * * * column 4, line 56 - column 5, line 4 * * | 1 | |
| Y | | 3 | |
| | – – – | | |
| D,X | US-A-3 444 517   (RABINOW) <br> * column 5, line 23 - column 6, line 70 * * * column 10, line 23 - column 11, line 2 * * | 1 | |
| | – – – | | |
| X | WO-A-8 703 707   (EASTMAN KODAK COMPANY) <br> * page 7, line 18 - page 8, line 12 * * * page 21, line 21 - line 33 * * | 1 | |
| | – – – | | |
| D | WO-A-8 703 707   (& US-A-4 777 510) <br> – – – | | |
| D,A | US-A-4 748 678   (TAKEDA) <br> * column 1, line 61 - column 2, line 58 * * <br> – – – – – | 1-3 | **TECHNICAL FIELDS SEARCHED (Int. Cl.5)** <br><br> H 04 N |

**The present search report has been drawn up for all claims**

| Place of search | Date of completion of search | Examiner |
|---|---|---|
| The Hague | 27 December 91 | DE ROECK A.F.A. |